# EUROPÄISCHE PATENTSCHRIFT

(11) **EP 4 298 137 B1**
(45) Veröffentlichungstag und Bekanntmachung des Hinweises auf die Patenterteilung: **02.04.2025**
(21) Anmeldenummer: 22757204.7
(22) Anmeldetag: 23.06.2022
(51) Int. Cl.: C08F 14/18, C08F 114/18, C08L 27/12

(54) **NEUARTIGE PHOSPHONIERTE FLUORELASTOMERE (PFKMS), PHOSPHONIERTE PERFLUORELASTOMERE (PFFKMS), DEREN HERSTELLUNGSVERFAHREN UND IHRE ANWENDUNG IN ELEKTROMEMBRANANWENDUNGEN**
NOVEL PHOSPHONATED FLUOROELASTOMERS (PFKMS), PHOSPHONATED PERFLUOROELASTOMERS (PFFKMS), THEIR PROCESS OF PREPARATION AND USE IN ELECTROMEMBRANE APPLICATIONS
NOUVEAUX FLUOROÉLASTOMÈRES PHOSPHONÉS (PFKM), PERFLUOROÉLASTOMÈRES PHOSPHONÉS (PFFKM), LEUR PROCÉDÉ DE PRÉPARATION ET LEUR UTILISATION DANS DES APPLICATIONS À ÉLECTRO-MEMBRANE

(30) Priorität: 23.06.2021 DE 102021003229
(43) Veröffentlichungstag der Anmeldung: 03.01.2024
(73) Patentinhaber: Riva Power Systems GmbH & Co. KG, 71522 Backnang (DE)
(72) Erfinder: CHROMIK, Andreas, 71364 Winnenden (DE)
(74) Vertreter: Gleim Petri Patent- und Rechtsanwaltspartnerschaft mbB
(86) Internationale Anmeldenummer: PCT/DE2022/100467
(87) Internationale Veröffentlichungsnummer: WO 2022/268266

(56) Entgegenhaltungen:
- DE-A1- 102011 015 212
- US-A- 3 970 533
- US-A- 4 260 698

## Beschreibung

Neuartige phosphonierte Fluorelastomere (pFKMs), phosphonierte Perfluorelastomere (pFFKMs), deren Herstellungsverfahren und ihre Anwendung in Elektromembrananwendungen

### Stand der Technik:

Die am häufigsten beschriebenen phosphonierten Systeme beruhen auf Arylpolymeren, die mittels nucleophiler Substitution (Michaelis-Arbusow- und Michaelis-Becker Umlagerung) von Arylhalogeniden und Di- bzw. Trialkylphosphit synthetisiert werden, wie dies beispielsweise in der DE 10 2011 015 212 A1 beschrieben ist.

Diese phosphonierten Arylpolymere sind dadurch gekennzeichnet, dass diese eine hohe thermische und chemische Stabilität besitzen. Zudem zeigen sie eine gute Protonenleitfähigkeit, auch im nicht befeuchteten Zustand bei Temperaturen oberhalb von 100°C. [1]

Nachteile der phosphonierten Arylpolymere z. B. aus DE 10 2011 015 212 A1 ist, dass diese im nicht hydrierten Zustand, also trocken, mechanisch instabil sind und brechen. [1-5]

### Darstellung der Erfindung

Die erfinderische Tätigkeit beruht darauf, neue phosphonierte Verbindungen, die auch im trockenen Zustand und bei hohen Temperaturen protonenleitend, chemisch und mechanisch stabil sind, zu finden. Diese Verbindungen sollten darüber hinaus einfach zu synthetisieren sein. Dies wird erreicht, in dem man nicht leitfähige Polymere wie FKM bzw. FFKM (Flour-Kautschuk) mit Trialkylphosphiten wie z. B. Tris(trimethylsilyl)phosphit (TTMSP) phosphoniert. Die Basiskautschuke FKM und FFKM besitzen bereits eine hohe mechanische Flexibilität, sowohl bei sehr niedrigen, als auch bei sehr hohen Temperaturen und sind chemisch stabil. Diese guten mechanischen und chemischen Eigenschaften behalten sie nach der Phosphonierung bei, sind sehr gut protonenleitend, auch bei Temperaturen über 100°C und löslich in organischen Lösungsmitteln.

Bisher sind keine Verbindungen bekannt, die diese positiven Eigenschaften aufweisen bzw. so hergestellt werden. Somit handelt es sich bei den hier synthetisierten Polymeren um eine neue Materialklasse und dem dazugehörigen Herstellungsprozess.

Die Reaktion soll möglichst effizient und einfacher Art sein, was hier gegeben ist, da das nicht verbrauchte Phosphonierungsmittel wieder zurückgewonnen werden kann.

Die phosphonierten Polymere sollen in gängigen Lösungsmitteln löslich sein, um daraus Membranen herstellen zu können.

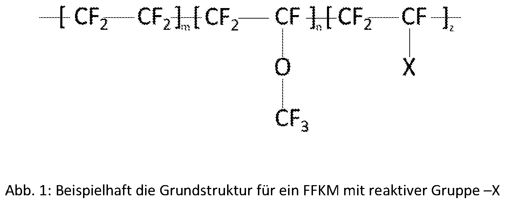

Die Phosphonierungsreaktion kann mit allen FKM, FFKM Derivaten in der aufgeführten Klassifizierung Typ 1 - Typ 5 durchgeführt werden, dabei ist es irrelevant aus welchen Monomer Verhältnissen das FKM bzw. FFKM aufgebaut ist, einzige Bedingung ist, dass Monomerbausteine mit einer reaktiven Gruppe -X im FKM bzw. FFKM vorhanden sind, siehe Beispielhaft Abb. 1.
Typ 1 Copolymere bestehend aus Vinylidenfluorid (VDF) und Hexafluoropropylene (HFP),
Typ 2 Terpolymere bestehend aus VDF, HFP und Tetrafluoroethylen (TFE)
Typ 3 bestehend aus VDF, TFE und Perfluoroalkylvinylether (PAVE)
Typ 4 bestehend aus TFE, VDF und Propylen
Typ 5 bestehend aus VDF, HFP, TFE, PAVE, Ethylen und Perfluorelastomere hauptsächlich bestehend aus TFE und PAVE

Die Erfindung beruht auf der Reaktion einer reaktiven Gruppe -X der Fluorkautschuke und Perfluorkautschuke mit TTMSP bzw. einer Seitenkette, bestehend aus einem Bisphenol AF welche bereits mit dem aliphatischen Backbone verbunden ist. Die reaktive Gruppe -X (Abb. 1), kann je nach Basismaterial -I, -Br, -Cl, -H bzw. das freie -OH der Bisphenol AF Seitenkette sein, oder ein Pseudohalogen (-CN, -N3, -OCN, -NCO, -CNO, -SCN, -NCS, -SeCN).

Als nicht einschränkendes Beispiel ist in Abb. 1 die Grundstruktur eines Perfluorelastomers (FFKM) gezeigt, wobei n, m, z in beliebigen Verhältnissen gemischt werden kann, wobei der Baustein z, die Anzahl der phosphonierbaren Stellen bestimmt.

Einzig wichtig für die Phosphonierung ist, dass es eine reaktive Gruppe -X im FKM/FFKM gibt, die mit TTMSP reagieren kann.

Die phosphonierten Polymere können je nach Phosponierungsgrad noch freie reaktive Gruppen -X enthalten. Diese freien Gruppen können verwendet werden, um die phosphonierten Polymere nachträglich kovalent zu vernetzen.

Die Phosphonierung zum pFKM und pFFKM findet in Lösung statt. Hierfür können die Basispolymere in Essigsäureethylester, Butanon, N-Methylpyrolidon (NMP), Dimethylacetamid (DMAc), Dimethylsulfoxid (DMSO) etc. gelöst werden. TTMSP kann wahlweise vorher, direkt beim Lösevorgang bzw. nachdem die Polymere gelöst sind zugegeben werden. Je nach gewünschtem Phosphonierungsgrad werden 0,1 Gew.% (Gewichtsprozent), geringer Phosphonierungsgrad, bis 5000 Gew.%, hoher Phosphonierungsgrad, bezogen auf die Polymereinwaage zugegeben.

Je nach verwendetem FKM/FFKM löst sich das Basismaterial bereits im Lösungsmittel vor der Phosphonierung oder erst wenn die Phosphonierung stattgefunden hat.

Am besten und schnellsten funktioniert die Reaktion in hoch siedenden aprotischen Lösungsmitteln wie beispielsweise NMP, DMAc und DMSO. Während der Reaktion ist eine Gasentwicklung zu beobachten, die anzeigt, wann die Reaktion startet. Dabei entsteht als Nebenprodukt Trimethylsilyl-X (TMS-X)

Die Reaktion wird so lange auf Reaktionstemperatur (60-200°C), abhängig vom verwendeten FKM/FFKM und Lösungsmittel, gehalten, bis die Gasentwicklung stoppt. Anschließend wird die Reaktion weitere 2-8 Stunden auf Temperatur gehalten, um sicher zu sein, dass die Reaktion vollständig ist.

Anschließend wird das TMS-X und überschüssiges TTMSP mittels Destillation entfernt. Das phosphonierte Polymer bleibt, in Form des Trimethylsilylesters des pFKM oder pFFKM, im Lösungsmittel zurück.

Die Polymerlösung wird nun in Wasser gegossen und fällt je nach Phosphonierungsgrad als Feststoff aus (niedriger Phosphonierungsgrad) bzw. geht in Lösung (hoher Phosphonierunsgrad). Durch kochen der Wasser/Polymermischung wird das phosphonierte Polymer von seiner Trimethylsilylesterform zur freien polymeren Phosphonsäure hydrolysiert.

Zum vollständigen Abtrennen von Hydrolysenebenprodukten kann das Polymer je nach Phosponierungsgrad in Wasser gewaschen werden. Nicht wasserlösliche pFKM/pFFKM bzw. Anteile können abfiltriert werden bzw. wasserlösliche können durch Dialyse aufgereinigt werden.

Eine weitere Variante ist, die Polymerlösung nicht in Wasser auszufällen, sondern direkt die Polymerlösung zu einer Membran weiter zu verarbeiten und diese anschließend in heißem Wasser zu hydrolysieren.

Die entstandenen Polymere und Membrane können in elektrochemischen Zellen verwendet werden. Vorzugsweise können die Polymere beziehungsweise Blendmembrane in Nieder- oder Mitteltemperaturbrennstoffzellen im Temperaturbereich von -30°C bis 250°C oder in Nieder- oder Mitteltemperaturelektrolyseuren im Temperaturbereich von 0°C bis 250°C eingesetzt werden. Darüber hinaus können die Membrane in chemischen Synthesereaktoren von -70°C bis 250°C verwendet werden. Die Membrane können auch als Separator in Primär- und Sekundärbatterien oder als Binder in Elektroden von Primär- und Sekundärbatterien verwendet werden.

### Nicht einschränkendes Ausführungsbeispiel:

10 g eines FKM werden mit 90 g N-Methylpyrolidon (NMP) versetzt, gerührt, erhitzt und aufgelöst. Nun gibt man 50 g TTMSP hinzu und erhitzt die Lösung auf 160°C. Nach wenigen Minuten setzt eine Gasentwicklung ein, die sich zunächst beschleunigt und dann langsam zum Erliegen kommt und das Ende der Reaktion anzeigt. Die Lösung wir noch 2 - 12 Stunden auf Reaktionstemperatur gehalten, um sicher zu gehen, dass die Reaktion vollständig ist. Nun können die Nebenprodukte und überschüssiges TTMSP mittels Destillation entfernt werden. Das im NMP gelöste pFKM kann nun entweder in Wasser ausgefällt werden oder direkt eine Membran aus der Reaktionslösung hergestellt werden. Sowohl die ausgefällte als auch die Variante der direkten Ziehung müssen noch in heißem bis kochenden Wasser nachbehandelt werden bzw. mit heißem Wasserdampf nachbehandelt werden um die Phosphonsäureform zu erhalten.

### Analytik des Versuchs:

Hier wird Beispielhaft eins der phosphonierten Polymere mit unterschiedlichen Phosphonierungsgraden beschrieben, dessen Ionenaustauscherkapazität, Leitfähigkeit bis 180°C und einem Elektrolysetest als proof of concept.

### Bestimmung der Ionenaustauscherkapazität

100 mg des fertig aufbereiteten Polymers werden mit einer gesättigten NaCl Lösung überschichtet und ca. 2h gerührt und 2 Tropfen Bromthymolblau als Indikator zugegeben. Dabei tauschen die Protonen des phosphonierten pFKM mit den Na-Ionen und es entsteht HCl. Die entstandene HCl wird mittels Titration mit 0,1 mol NaOH nachgewiesen. Daraus lässt sich der IEC_{direkt} bestimmen. Um den Gesamt IEC_{Gesamt} zu bestimmen, werden zur selben Lösung 3ml NaOH 0,1M im Überschuss dazu gegeben, wieder 2h gerührt und anschließend mit HCl zurück titriert.

Für den Versuch in [0018] erhält man einen IEC_{direkt}= 0,99 mmol/g und IEC_{Gesamt} = 2,62 mmol/g.

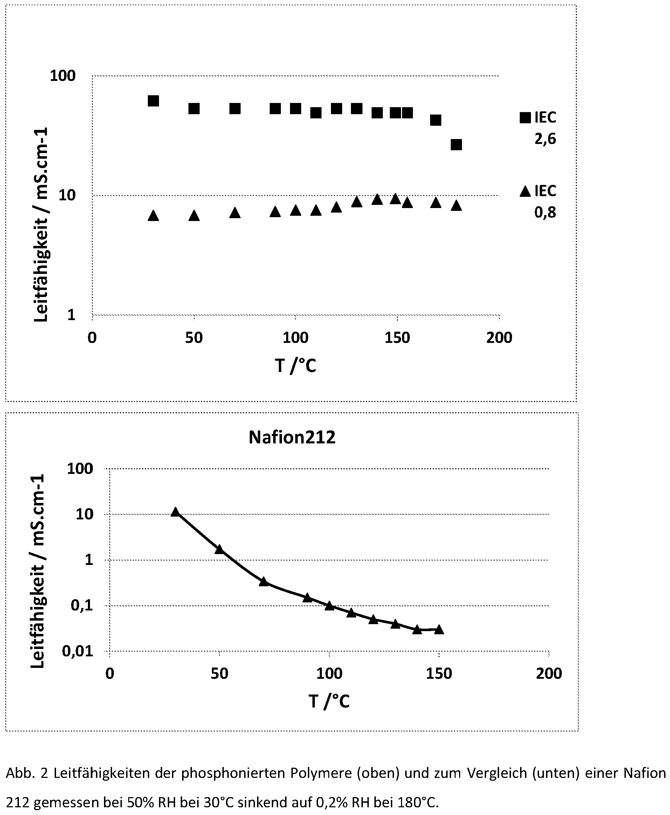

Wenn man denselben Versuch mit 10g FKM und 10g TTMSP durchführt, erhält man einen IEC_{direkt}= 0,56 mmol/g und IEC_{Gesamt} = 0,8 mmol/g. Hier erkennt man eindeutig den Zusammenhang zwischen den Edukt Verhältnissen, dem Phosphonierungsgrad und der Leitfähigkeit (Abb. 2).

### Leitfähigkeit

In Abb. 2 kann man den Einfluss des Phosphonierungsgrades auf die Leitfähigkeit sehr gut erkennen und zudem, dass die Leitfähigkeit weit über 100°C nicht abnimmt und somit neue Arten von elektrochemischen Zellen, weit über 150°C, möglich sind. Zum Vergleich ist eine Nafion 212 mit denselben Messbedingungen aufgeführt.

### Proof of concept Elektrolysetest mit IEC: 2,6 mmol/g Membran

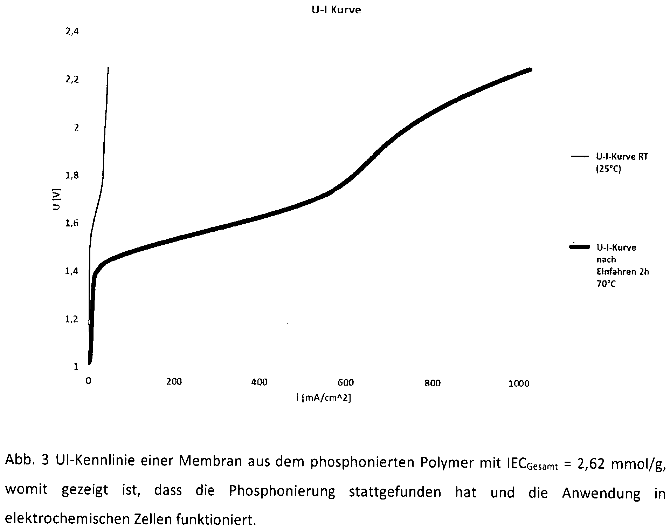

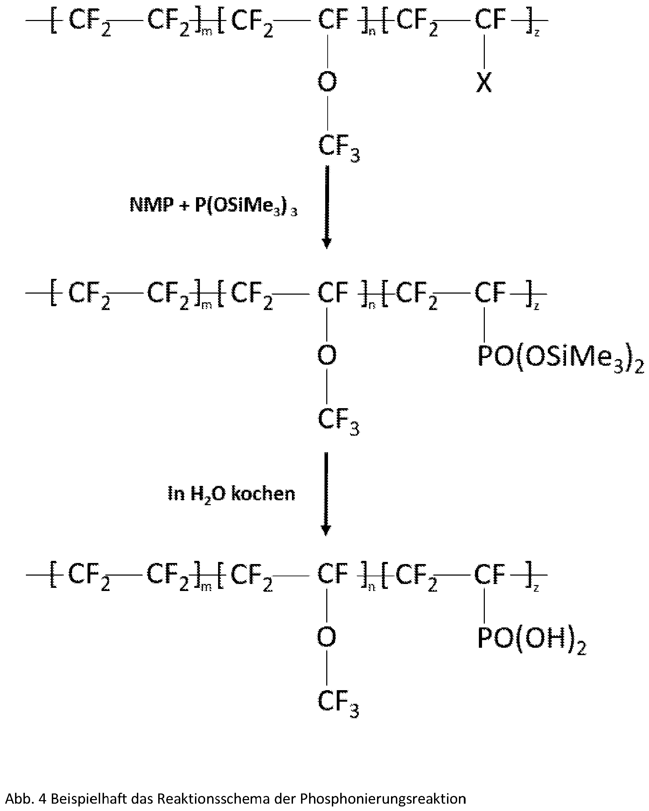

Aus dem phosphonierten Polymer mit dem IEC=2,6 mmol/g wurde eine Membran hergestellt und diese in einer Elektrolysezelle vermessen, womit gezeigt ist, dass die Anwendung in Elektromembranverfahren funktioniert. (Abb. 3).

### Literatur

[1] Vladimir Atanasov and Jochen Kerres Highly Phosphonated Polypentafluorostyrene; Macromolecules 2011, 44, 16, 6416-6423
[2] Vladimir Atanasov, Dietrich Gudat, Bastian Ruffmann, Jochen Kerres, Highly phosphonated polypentafluorostyrene: Characterization and blends with polybenzimidazole, European Polymer Journal, Volume 49, Issue 12, 2013, Pages 3977-3985,
[3] Vladimir Atanasov, Matthias Bürger, Sandrine Lyonnard, Lionel Porcar, Jochen Kerres, Sulfonated poly(pentafluorostyrene): Synthesis & characterization, Solid State Ionics,Volume 252, 2013, Pages 75-83,
[4] Vladimir Atanasov, Jochen Kerres, ETFE-g-pentafluorostyrene: Functionalization and proton conductivity, European Polymer Journal, Volume 63, 2015, Pages 168-176,
[5] Vladimir Atanasov, Andrey Oleynikov, Jiabing Xia, Sandrine Lyonnard, Jochen Kerres, Phosphonic acid functionalized poly(pentafluorostyrene) as polyelectrolyte membrane for fuel cell application Journal of Power Sources, Volume 343, 2017, Pages 364-372

## Patentansprüche

1. Phosphonierte aliphatische Fluorpolymerkautschuke (pFKM) und phosphonierte aliphatische Perfluorpolymerkautschuke (pFFKM), synthetisiert aus Fluorpolymerkautschuk (FKM) und Perfluorpolymerkautschuk (FFKM),
**dadurch gekennzeichnet, dass**
die Phosphonsäuregruppe direkt an der Hauptkette bzw. an einer Seitenkette des Polymers vorliegt und die Seitenkette aliphatischen bzw. Arylcharakter hat

2. Phosphonierte teil- und perfluorierte aliphatische Fluor- oder Perfluorkautschuke nach Anspruch 1,
**dadurch gekennzeichnet, dass**
der Phosphonierungsgrad bis zu einer Phosphonsäuregruppe pro Wiederholungseinheit aufweisen kann und sich daraus Membranen herstellen lassen.

3. Phosphonierte Polymere nach Anspruch 1 oder 2,
**dadurch gekennzeichnet, dass**
nicht abreagierte reaktiven Gruppen -X vorhanden sind (Phosphonierungsgrad <1), die anschließend kovalent vernetzt werden können und daraus kovalent vernetzte Membranen hergestellt werden können,
wobei -X mindestens ein Mitglied, ausgewählt aus der Gruppe bestehend aus -I, -Br, - Cl, -H,-CN, -N3, -OCN, -NCO, -CNO, -SCN, -NCS, -SeCN bzw. das freie -OH der Bisphenol AF Seitenkette, ist

4. Phosphonierte Polymermembranen nach einem der Ansprüche 1 bis 3,
**dadurch gekennzeichnet, dass**
die erhaltenen phosphonierten Polymere mit basischen Polymeren, wie z. B. Polybenzimidazol oder Anionentauscherpolymeren, zu Säure-Base-Blendmembranen, kovalent-vernetzten Membranen und kovalent-vernetzten Säure-Base Blendmembranen geblendet werden können

5. Phosphonierte Polymermembranen nach Anspruch 4,
**dadurch gekennzeichnet, dass**
das Mischungsverhältnis zwischen phosphoniertem und basischem Polymer zwischen 99 mol% phosphoniertes Polymer/1 mol% basisches Polymer und 1 mol% phosphoniertes Polymer/99 mol% basisches Polymer beträgt.

6. Phosphonierte Polymermembranen nach einem der Ansprüche 1 - 5,
**dadurch gekennzeichnet, dass**
dem Blend noch zusätzlich ein beliebiges sulfoniertes Polymer in beliebiger Menge hinzugefügt werden kann.

7. Phosphonierte Polymermembranen nach einem der Ansprüche 4 bis 6,
**dadurch gekennzeichnet, dass**
die Blendmembran noch zusätzlich mit Phosphorsäure in beliebiger Menge dotiert werden kann.

8. Phosphonierte Polymermembranen nach Anspruch 7,
**dadurch gekennzeichnet, dass**
als Phosphorsäure-Dotierungsgrad Werte zwischen 40% und 500% bevorzugt werden.

9. Verfahren zur Herstellung phosphonierter Polymere und Membranen, pFKM oder pFFKM, , **dadurch gekennzeichnet, dass** das FKM oder FFKM im Phosphonierungsmittel gelöst oder suspendiert wird, auf Temperaturen zwischen 40°C und 200°C erhitzt wird, zwischen 30 Minuten und 12 Stunden erhitzt wird, danach das überschüssige Phosphonierungsmittel abdestilliert oder anders entfernt wird und das Polymer durch Dialysieren oder Ausfällen isoliert wird,
wobei das FKM oder FFKM über zumindest eine reaktive Gruppe -X verfügt, wobei -X mindestens ein Mitglied, ausgewählt aus der Gruppe bestehend aus -I, -Br, -Cl, -H,-CN, -N3, -OCN, -NCO, -CNO, -SCN, -NCS, -SeCN bzw. das freie -OH der Bisphenol AF Seitenkette ist

10. Verfahren nach Anspruch 9,
**dadurch gekennzeichnet, dass**
das FKM oder FFKM unter Hinzufügung zumindest eines weiteren Lösungsmittels in dem Phosponierungsmittel gelöst oder suspendiert wird.

11. Verfahren nach Anspruch 10
**dadurch gekennzeichnet, dass**
das Lösungsmittel zumindest ein Mitglied, ausgewählt aus der Gruppe bestehend aus N-Methylpyrolidon (NMP), Dimethylecetamid (DMAc) oder Dimethylsulfoxid (DMSO), ist.

12. Verfahren nach einem der Ansprüche 9 bis 11
**dadurch gekennzeichnet, dass**
das Phosphonierungsmittel Tris(trimethylsilyl)phosphit ist.

13. Verwendung der Polymere und Membranen nach den Ansprüchen 1 bis 8 in elektrochemischen Zellen.

14. Verwendung der Membranen bzw. Blendmembranen nach Anspruch 13 in Nieder- oder Mitteltemperaturbrennstoffzellen im Temperaturbereich von -30°C bis 250°C.

15. Verwendung der Membranen nach Anspruch 13 in Nieder- oder Mitteltemperaturelektrolyseuren im Temperaturbereich von 0°C bis 250°C.

16. Verwendung der Membranen nach Anspruch 13 in chemischen Synthesereaktoren von -70°C bis 250°C.

17. Verwendung der Membranen nach Anspruch 13 als Separator in Primär- und Sekundärbatterien

18. Verwendung der Polymere nach Anspruch 1-4 als Binder in Elektroden von Primär- und Sekundärbatterien

## Claims

1. Phosphonated aliphatic fluoropolymer rubbers (pFKM) and phosphonated aliphatic perfluoropolymer rubbers (pFFKM) synthesized from fluoropolymer rubber (FKM) and perfluoropolymer rubber (FFKM), **characterized in that** the phosphonic acid group is present directly on the main chain and on/or a side chain of the polymer, respectively, and the side chain is of aliphatic and aryl character, respectively.

2. Phosphonated partially fluorinated, fluorinated and perfluorinated aliphatic rubbers according to claim 1, **characterized in that** the degree of phosphonation that can have up to one phosphonic acid group per repeating unit and membranes can be produced there from.

3. Phosphonated polymers according to claim 1 or 2, **characterized in that** unreacted reactive groups -X that are present (degree of phosphonation <1), which can subsequently be covalently crosslinked and covalently crosslinked membranes can be produced there from, wherein -X is at least one member selected from the group consisting of -I, -Br, -Cl, -HCN, -N3, -OCN, -NCO, -CNO, - SCN, -NCS, -SeCN or free -OH of the bisphenol AF side chain, respectively.

4. Phosphonated polymer membranes according to claims 1 to 3, **characterized in that** the obtained phosphonated polymers can be blended with basic polymers, such as polybenzimidazole or anion exchange polymers to form acid-base blend membranes, covalently crosslinked membranes and covalently crosslinked acid-base blend membranes

5. Phosphonated polymer membranes according to claim 4, **characterized in that** the mixing ratio between phosphonated polymer and basic polymer is between 99 mol % phosphonated polymer and 1 mol% basic polymer to 1 mol % phosphonated polymer and 99 mol % basic polymer.

6. Phosphonated polymeric membranes according to any one of claims 1 to 5, **characterized in that** any sulfonated polymer can be added to the blend in any amount.

7. Phosphonated polymer membranes according to any one of claims 4 to 6, **characterized in that** the blend membrane can still additionally be doped with phosphoric acid in any amount.

8. Phosphonated polymer membranes according to claim 7, **characterized in that** values between 40 wt. % and 500 wt. % are preferred as the phosphoric acid doping level.

9. Process for the preparation of phosphonated polymers and membranes, pFKM or pFFKM, **characterized in that** the FKM or FFKM is dissolved or suspended in the phosphonating agent, heated to temperatures between 40 °C to 200 °C, heated for 30 minutes to 12 hours, thereafter the excess phosphonating agent is distilled off or otherwise removed and the polymer is isolated by dialysis or precipitation, wherein the FKM or FFKM has at least one reactive group - X, wherein -X is at least one member selected from the group consisting of -I, -Br, -Cl, -H,-CN, -N3, -OCN, -NCO, -CNO, -SCN, -NCS, -SeCN, respectively the free -OH of the bisphenol AF side chain.

10. Process according to claim 9, **characterized in that** the FKM or FFKM is dissolved or suspended in the phosphonating agent with the addition of at least one further solvent.

11. The process according to claim 10, **characterized in that** the solvent is at least one member selected from the group consisting of N-methylpyrolidone (NMP), Dimethylecetamide (DMAc) or Dimethylsulfoxide (DMSO).

12. The process according to any one of claims 9 to 11 **characterized in that** the phosphonating agent is tris(trimethylsilyl)phosphite.

13. Use of the polymers and membranes according to claims 1 to 8 in electrochemical cells.

14. Use of the membranes or blend membranes according to claim 13 in low or medium temperature polymer electrolyte fuel cells PEM fuel cells in the temperature range from -30 °C to 250 °C.

15. Use of the membranes according to claim 13 in low- or medium temperature PEM electrolysers in the temperature range from 0 °C to 250 °C.

16. Use of the membranes according to claim 13 in chemical synthesis reactors from -70 °C to 250 °C.

17. Use of the membranes according to claim 13 as separators in primary and secondary batteries.

18. Use of the polymers according to claim 1 to 4 as binders in electrodes of primary and secondary batteries.

## Revendications

1. Caoutchoucs polymères fluorés aliphatiques phosphonés (pFKM) et caoutchoucs polymères perfluorés aliphatiques phosphonés (pFFKM), synthétisés à a partir de caoutchouc polymère fluoré (FKM) et de caoutchouc polymère perfluoré (FFKM),
**caractérisés en ce que**
le groupe phosphono est présent directement sur la chaîne principale ou sur sur une chaîne latérale du polymère et la chaîne latérale a un caractère aliphatique ou aromatique.

2. Caoutchoucs fluorés ou perfluorés aliphatiques partiellement fluorés et perfluorés, phosphonés, selon la revendication 1,
**caractérisés en ce que**
le degré de phosphonation peut comporter jusqu'à un groupe phosphono par motif répétitif et des membranes peuvent être fabriquées à partir de ceux-ci.

3. Polymères phosphonés selon la revendication 1 ou 2,
**caractérisés en ce que**
sont présents des groupes réactifs -X n'ayant pas entièrement réagi (degré de phosphonation < 1), qui peuvent ensuite être réticulés par liaison covalente et des membranes réticulées par liaison covalente peuvent être fabriquées à partir de ceux-ci,
-X étant au moins un radical choisi dans le groupe constitué
par -I, -Br, -Cl, -H, -CN, -N3, -OCN, -NCO, -CNO, -SCN, -NCS, -SeCN ou le groupe --OH libre de la chaîne latérale du bisphénol AF.

4. Membranes polymères phosphonées selon l'une quelconque des revendications 1 à 3,
**caractérisées en ce que**
les polymères phosphonés obtenus peuvent être mélangés avec des polymères basiques, comme par exemple le polybenzimidazole ou des polymères échangeurs d'anions, pour conduire à des membranes mixtes acide-base, des membranes réticulées par liaison covalente et des membranes mixtes acide-base réticulées par liaison covalente.

5. Membranes polymères phosphonées selon la revendication 4,
**caractérisées en ce que**
le rapport de mélange entre polymère phosphoné et polymère basique est compris entre 99 % en moles de polymère phosphoné/1 % en moles de polymère basique et 1 % en moles de polymère phosphoné/99 % en moles de polymère basique.

6. Membranes polymères phosphonées selon l'une quelconque des revendications 1 à 5,
**caractérisées en ce qu'**
un quelconque polymère sulfoné peut encore être ajouté en plus, en quantité quelconque, au mélange.

7. Membranes polymères phosphonées selon l'une quelconque des revendications 4 à 6,
**caractérisées en ce que**
la membrane mixte peut encore être en plus dotée d'acide phosphorique en quantité quelconque.

8. Membranes polymères phosphonées selon la revendication 7,
**caractérisées en ce que**
comme degré de dotation d'acide phosphorique, des valeurs comprises entre 40 % et 500 % sont préférées.

9. Procédé pour la production de polymères phosphonés et de membranes, pFKM ou pFFKM, **caractérisé en ce que** le FKM ou FFKM est dissous ou mis en suspension dans l'agent de phosphonation, est chauffé à des températures comprises entre 40 °C et 200 °C, est chauffé entre 30 minutes et 12 heures, puis l'agent de phosphonation en excès est éliminé par distillation ou éliminé d'une autre façon et le polymère est isolé par dialyse ou précipitation,
le FKM ou FFKM étant doté d'au moins un groupe réactif -X, -X étant au moins un radical choisi dans le groupe constitué
par -I, -Br, -Cl, -H, -CN, -N3, -OCN, -NCO, -CNO, -SCN, -NCS, -SeCN ou le groupe -OH libre de la chaîne latérale du bisphénol AF.

10. Procédé selon la revendication 9,
**caractérisé en ce que**
le FKM ou FFKM est dissous ou mis en suspension dans l'agent de phosphonation par addition d'au moins un solvant supplémentaire.

11. Procédé selon la revendication 10,
**caractérisé en ce que**
le solvant est au moins un solvant choisi dans le groupe constitué par la N-méthylpyrrolidone (NMP), le diméthylacétamide (DMAc) ou le diméthylsulfoxyde (DMSO).

12. Procédé selon l'une quelconque des revendications 9 à 11,
**caractérisé en ce que**
l'agent de phosphonation est le phosphite de tris(triméthylsilyle).

13. Utilisation des polymères et membranes selon les revendications 1 à 8 dans des cellules électrochimiques.

14. Utilisation des membranes ou membranes mixtes selon la revendication 13 dans des piles à combustible à basse ou moyenne température, dans la plage de température de -30 °C à 250 °C.

15. Utilisation des membranes selon la revendication 13 dans des électrolyseurs à basse ou moyenne température, dans la plage de température de 0 °C à 250 °C.

16. Utilisation des membranes selon la revendication 13 dans des réacteurs de synthèse chimique de -70 °C à 250 °C.

17. Utilisation des membranes selon la revendication 13 en tant que séparateur dans des batteries primaires et secondaires.

18. Utilisation des polymères selon la revendication **1-4** en tant que liant dans des électrodes de batteries primaires et secondaires.
